# EUROPEAN PATENT SPECIFICATION

(11) **EP 1 637 976 B1**
(45) Date of publication and mention of the grant of the patent: **11.03.2009**
(21) Application number: 04021921.4
(22) Date of filing: 15.09.2004
(51) Int. Cl.: G06F 3/023, G06F 3/033

(54) **Vehicle multimedia system and method for operating a vehicle multimedia system**
Multimedia System für Fahrzeugen und Methode um ein Multimedia System für Fahrzeugen zu bedienen
Système multimédia pour véhicules et méthode pour contrôler un système multimédia pour véhicules

(43) Date of publication of application: 22.03.2006
(60) Divisional application: 07008525.3
(73) Proprietor: Harman Becker Automotive Systems GmbH, 76307 Karlsbad (DE)
(72) Inventor: Kolletzki, Johannes, 72666 Neckartailfingen (DE)
(74) Representative: Bertsch, Florian Oliver

(56) References cited:
- EP-A- 1 387 243
- DE-A- 10 050 223
- US-A- 5 270 689
- US-A- 6 104 399
- US-A1- 2004 046 751
- US-A1- 2004 143 372
- US-B1- 6 650 345

## Description

The invention relates to a vehicle multimedia system and to a method for operating a vehicle multimedia system. The invention relates in particular to a vehicle multimedia system comprising a display on which the current operating state of the multimedia system is shown.

### Related art

Recently, the use of multimedia systems has become common in vehicles. These multimedia systems are integrated within a single device and provide the end user with different functions. These multimedia systems normally comprise radio modules, navigation modules, a cellular telephone module and/or an audio module. All these different modules and all the features provided by the different modules have to be controlled by the end user while driving. Thus, the controlling of the different multimedia modules has to be easy and the driver should not be diverted from the traffic.

Furthermore, the space in which these integrated multimedia systems are provided, is limited in vehicles, as these multimedia systems are commonly arranged within the dashboard of the vehicle. In the dashboard, however, many other control units and operating devices are installed so that the multimedia system has to be accommodated in a limited space.

The multimedia systems normally comprise displays which help to inform the user of any information provided by the multimedia systems, be it a travelling route in a navigation mode, or the name of the radio station in a radio mode. When a setting of the multimedia system is to be changed, a menu structure is provided showing the different features of the multimedia system. By operating multiple operating devices of an operating module of the multimedia system in different ways, the setting of the multimedia system can be changed through the menu structure. Normally, this main menu can be entered by pressing a predetermined operating device. However the information shown on the display is basically passive information not allowing any user interaction.

US 2004/0046751 A1 discloses a multifunction operating device, the operating device being a bidirectional rotary element located either on the steering wheel or a center console, the value of the selected feature being changed by turning the wheel.

US 2004/0143372 A1 discloses a vehicle computer system comprising a main menu and several submenus. Furthermore, a switching member is provided causing the activation of individual submenus of the main menu in a predetermined order.

US 6,650,345 B1 discloses an operating device for operating a vehicle electronic device, a sensor detecting an approach of the user to an input device for operating the electronic device.

US 5,270,689 discloses a vehicle multimedia system according to the preamble of claim 1.

A need exists to provide a multimedia system in a vehicle which can be easily controlled and in which the setting of the multimedia system can be changed easily with the lowest distraction of the driver.

### Summary of the invention

This need is accomplished by a vehicle multimedia system and by a method for operating a vehicle multimedia system as mentioned in the independent claims.

Preferred embodiments of the invention are described in the dependent claims.

According to a first aspect of the invention a multimedia system in a vehicle is provided according to claim 1. According to the invention the icon representing different features of the multimedia system shown on the display can be addressed directly by operating the operating device in a single way. As a consequence, these items are directly selectable, and the setting of the multimedia system can be changed easily by selecting the icon shown on the display and by changing the function, represented by this icon. The display does not only show information, but offers direct access to the different features of the multimedia system. As a consequence, there is no need anymore to change a setting of the multimedia system by operating different operating devices and by entering a main menu structure, in which the different features of the multimedia system are provided. By making the icons and the information relating to the icon directly accessible by operating one operating device in a single way the feature corresponding to the selected icon can be controlled easily.

According to a further aspect of the invention the value of the feature represented by an icon is changed by pressing one operating device of the operating module. The selection of the icon is confirmed by pressing the operating device.

According to the invention, it is possible to change the value of an icon having more than two possible values by pressing a button. This means that each pressing of the button activates the next value of the icon. When the button is pressed, it is possible that the value is activated simultaneously, e.g. when scrolling the list of radio stations. However, it is also possible that the value is just activated after a certain amount of time, e.g. while changing the frequency band from the very high frequency band (VHF) to the short wave band or the middle wave band. In this situation it may be bothering that the change of frequency band is activated in the moment of pressing the button, as the driver would hear the change of frequency band. If the change of the value is just activated after a timeout, the change of the frequency band is more user-friendly, as the frequency band is only changed after a certain amount of time in which the button is not pressed. In this case, the user does not hear each modification of the frequency band. When the operating device is not touched for a certain amount of time, it can be assumed that the value or sub-icon is activated that the user wants to choose.

It should be understood that not all items representing a feature of the multimedia system are always displayed on the display. In dependence of the operating mode of the multimedia system, *i*.*e*., whether it runs in a radio mode, an audio mode, a navigation mode or a cell phone mode, the display may display different icons representing the key features of the different modules of the multimedia system. The display may display certain icons and may not display other icons. The other icons not shown on the display, and possibly also the icons shown on a display can still be edited by entering a main menu by selecting the different features of the icon by going through the menu.

The multimedia system may further comprise a marker which marks the selected icon and which moves from selected icon to selected icon, when the turn button is turned. By marking the selected icon, the marker helps to inform the user which icon he or she has addressed by turning the turn button. The marker could jump from icon to icon when the button is turned. The marker could mark the icon by selecting a different colour for the marked icon or by choosing another background for the selected icon. There are many possibilities known in the art to inform the user of a display which icon shown on the display is currently selected, when the end user operates an operating device.

According to the invention the operating module comprises at least one turn press button, wherein icons shown on the display are selected by turning the turn press button, whereas the value of the feature of an icon is changed by pressing the turn press button. The combined turn press button helps to change the setting of the multimedia system in a simple way, as this single button can be used to first of all select the icon by turning the button and to confirm the choice and to change the value of the icon by pressing the button.

According to a preferred embodiment of the invention, the direct way to change the settings by making the icons directly selectable is possible, when a select mode is chosen. This select mode can be activated when a predetermined operating device is activated preferably for a predetermined amount of time. By way of example, the turn press button could be pressed for a predetermined amount of time, so that after pressing the turn press button for a predetermined amount of time the select mode is chosen, and by turning the turn button the icons shown on the display can be addressed and selected. It is also possible to leave the select mode by pressing a further predetermined operating device for a predetermined amount of time.

It is possible to choose the turn press button as predetermined operating device, especially so that when the system is working in the select mode and when the turn press button is again pressed for a predetermined amount of time the select mode is exited.

Furthermore, the marker may mark a predetermined icon as home icon after a time out in which the operating module is not operated. When the end user does not touch the operating module and no operating device is operated for a certain amount of time one predetermined icon, called home icon, is marked. By way of example, this home icon could be the icon allowing to enter the main menu which is used to change the settings of the multimedia system by going through the menu. When the multimedia system works in the select mode and when no operating device is operated the marker jumps back to the home icon. When the turn button is turned, the different icons shown on the display are selected.

According to a further embodiment of the invention it is also possible to hook one icon as selected icon so that the hooked icon will play the role of the home icon mentioned above. This may be possible according to a further embodiment of the invention when a predetermined operating device is activated, especially for a predetermined amount of time, so that the marker hooks one icon as selected icon when the marker has marked said icon before. If the predetermined operating device is operated as described above in order to hook one icon, a popup menu may ask the user "hook to this icon", or may output an audible signal after hooking has succeeded. The current hook should in some appropriate way be visible on the display.

The hooking of an icon means that this icon is now the home icon. This means that after a certain timeout the market jumps back to this home icon.

When the multimedia system is not working in the select mode, the system works in a standard mode. This standard mode however depends on the selected home icon, i.e. which icon was chosen as hooked icon. When the system was hooked to one icon this icon was chosen as home icon. When the system is not working in the select mode, but in the standard mode, this means that when one icon has been chosen as hooked icon, after a timeout the marker jumps back to the selected home icon, and the system is configured such that an editing of this icon has priority over all other operations. This means that the operation needed to edit the icon is reserved and can not be used in any other way. By way of example, when the options icon is chosen as home icon, then the pressing of the operating device is reserved for entering the menu. The turning of the operating device is not used for this icon and can therefore be used for selecting other icons as in the select mode. If however, the frequency icon is chosen as home icon, then the turning of the operating device is reserved for choosing other frequencies, the operation of pressing the operating device is not used. If in this case, the user wants to enter the select mode to select the other icons by turning the operating device, he or she has to enter the select mode, as described above, e.g. by pressing a predetermined button for predetermined amount of time.

As a consequence, the standard mode, which is also called edit mode in the present case, depends on the fact which icon has been selected as home icon. In the standard mode, the operability of the hooked icon has the priority over all other functions. In this mode the editing of the icon is carried out by operating the operating device as necessary for the editing of this icon, this being the reason why this standard mode can also be called edit mode. If an icon is chosen as home icon, in which the value is changed by pressing the operating device, the function of turning the operating device is not needed in this case, so that the turning also makes a marker jump from icon to icon. In this case, a change of the operating mode into the select mode is not necessary. However, if a home icon is chosen, in which the turning is needed for editing the icon, then a change of the operating mode is necessary in order to return to the select mode, e.g. by pressing a predetermined operating device for a predetermined amount of time.

By way of example, this may be helpful when the user wants to hook the frequency icon in a radio operating mode. Every time the user is turning the operating device the frequency is changed. When the end user wants to edit another icon, he or she has to press the predetermined operating device to enter again the select mode. The user can then select another icon and edit its value. If the display is not hooked to the edited icon, the marker will return to the hooked item after the timeout, so that when turning the operating device after a certain timeout the user will edit the hooked icon and change the frequency. In this embodiment the user can choose one icon as a preferred icon he or she wants to edit. In the case the frequency icon is the hooked icon, the user changes the frequency every time he or she is turning the operating device.

The invention further relates to a method for operating a vehicle multimedia system according to claim 9. According to this method a very direct way to change the settings by selecting the icons on the screen is obtained. It is not necessary anymore to use the main menu to change the different features of the multimedia system.

According to a preferred embodiment of the invention the icons shown on the display are selected by turning a turn button of the operating module. By turning the turn button the different icons shown on the display can be addressed and selected easily. It should be understood that not all features of the multimedia system are displayed on the display simultaneously, as too may icons would probably confuse the user. The icons shown on the display may by way of example depend on the fact in which operating mode the multimedia system is working, be it a radio mode, an audio mode, a navigation mode or a telecommunication mode. Furthermore, not all features relating to one special operating mode will be displayed. However, the most important features may be displayed by icons.

According to a further aspect the user may choose the icons to be displayed on the display in the different operating modes, so that by choosing the icons to be shown on the display the user can choose the features he or she wants to address directly by turning the turn button of the operating module.

In a preferred embodiment the selected icon is marked, so that the user can see which icon is addressed when turning the turn button. By turning the turn button the marker will jump from icon to icon. If the user wants to edit a certain icon he or she may press an operating device of the operating module so that the value of the feature represented by the icon can be changed.

Depending on the possible values of the icon the pressing of the operating device may have different consequences. If the feature represented by the icon has two possible values, the pressing of the operating device will toggle its value. If the icon has more than two possible values, sub-icons will be displayed on the screen representing the possible values of the feature, when the operating device is pressed. As mentioned above, it is also possible to address the sub-icons by pressing the button, with each pressing the value of the icon being changed. The fact whether the value of the icon is changed by pressing a button or by turning a button may depend on the ergonomics, the designer of the system wants to choose.

According to the invention the icons shown on the display are selected and marked by turning a turn press button, whereas the value of the feature of an icon is changed by pressing the turn press button. This method of accessing an icon and of editing the icon by using one single operating device allows a fast and easy controlling of the multimedia system.

This way of editing the features of a multimedia system is possible when the multimedia system is working in a select mode which can be activated, when a predetermined operating device is activated. Furthermore, it is possible to activate the select mode when the predetermined operating device is activated for a predetermined amount of time. Additionally, it is possible to leave the select mode in which the different icons can be addressed by turning the turn button, when the predetermined operating device is activated one more time. It is also possible that this operating device has to be activated for a predetermined amount of time in order to leave the select mode.

In the following, the different steps for editing an icon which may have more than two possible values are explained. First of all, the operating device may be turned until said icon the user wants to change is reached and marked. It has to be said that this is only possible when the operating device is working in the select mode as described above. In the next step, the operating device is pressed for selecting said icon, so that the possible values of said icon are displayed in sub-icons. Next, the operating device is turned until the sub-icon representing the value the user wants to select is marked. In the next step the operating device is pressed for selecting the marked sub-icon. As mentioned above the sub-icons can either be displayed simultaneously or one after the other. In both cases, however, by turning the operating device the sub-icons are marked one after the other, so that they can be selected.

Furthermore, the marker may select and mark a predetermined icon, known as home icon after a timeout in which the operating module is not operated. As mentioned above, it is also possible to choose the home icon to which the marker jumps when the operating module is not operated by hooking the marker to one selected icon.

Other features and advantages of the invention will become apparent to one with skill in the art upon examination of the following figures,
in which
- Fig. 1: shows an example of a multimedia system displaying different icons to be selected by an user,
- Fig. 2: shows a flowchart showing the different steps needed to change the setting of the multimedia system,
- Fig. 3: shows the changing of the setting in more detail,
- Fig. 4: shows a flowchart showing the different steps for choosing a radio station out of a list,
- Fig. 5: shows a flowchart showing the different steps of an icon, when the system is hooked to one icon.

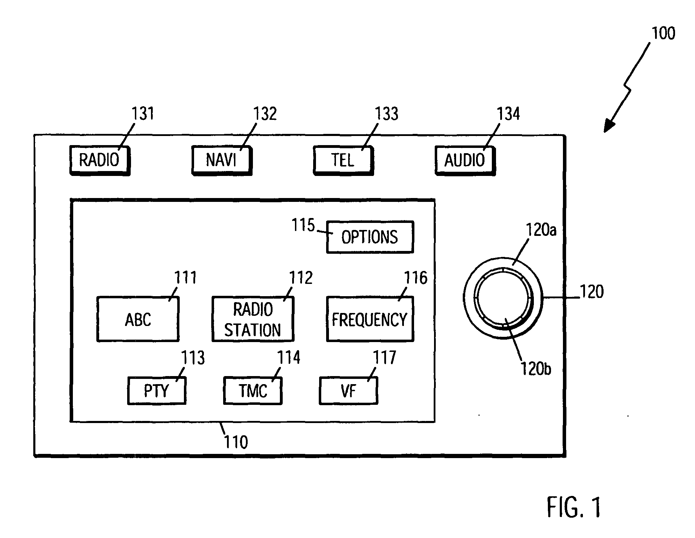

Fig. 1 is a schematic view of a front panel of a vehicle multimedia system 100. The multimedia system 100 comprises a display 110 showing different icons 111 to 117. In the embodiment shown the multimedia system is working in a radio operating mode, so that the icons shown on the display mainly relate to features of a radio operating mode. The multimedia system 100 further comprises a combined turn press button 120. The turn press button 120 comprises a first ring shaped segment 120a, which is rotatably fixed to the multimedia system. The turn press button further comprises a circular shaped component 120b, on which the user can press. The different parts of the turn press button 120 can be activated independently from the other part, so that when turning the part 120a, the button 120b in the middle does not move, and when the button 120b in the middle is pressed, the part 120a does not move. Furthermore, buttons 131 to 134 may be provided, which can be used for directly choosing one of the possible operating modes. When the radio button 131 is pressed, the multimedia system will operate in the radio operating mode, when the navigation button 132 is pressed, the multimedia system will work in a navigation operating mode, when the cellular telephone button 133 is pressed, the system will work in the telephone operating mode and the user can make a call. When the audio button 134 is pressed, the system will work in an audio mode, in which the user can hear a cassette tape, an audio CD or any other recordable medium such as a hard disk or memory units, which can be inserted into the multimedia system.

It should be understood, that the multimedia system may comprise many other operating devices, which are not shown in the embodiment of Fig. 1. By way of example, the multimedia system may have another turn press button on the other side of the display 110 or any other operating device. However, their description is omitted for the sake of clarity, as only features which help for the understanding of the invention are described in detail.

In the embodiment shown, the multimedia system is working in a radio operating mode. In this case, icon 112 may represent the icon showing the name of the radio station. Icon 111 shown on the display informs the user how all the radio stations stored in a list which comprises all the radio stations, the receiver is able to receive, are stored in this list. In the present embodiment of icon 111, the letters A, B, C are shown. This icon informs the user that the different radio stations shown in icon 112 are listed in an alphabetical order, so that when icon 112 is selected, and the turn press button 120 is turned the radio station shown in icon 112 will change in an alphabetical order.

Furthermore, icon 116 shows the frequency, on which the program of the radio station is broadcast. The item 113 PTY allows the user to filter the different radio stations according to their program type. Using the PTY button, the user can edit the radio system in such a way that only radio stations broadcasting news, classic music, country music, pop, etc. are used. The icon 114 represents the TMC icon (traffic message channel). With TMC the user can be informed of all the traffic information broadcast in the traffic message channel, which is part of the broadcast signal. Icon 117 indicates that the broadcast radio station also announces traffic news. Furthermore, icon 115 is provided to enter the main menu, in which all the possible features of the multimedia system or of the radio system can be edited.

It should be understood that the display can display many other items or only some of the icons shown in Fig. 1. It is also possible to setup the display by selecting the features which should be represented by an icon on the display. The feature of changing the setup of the displayed icon can, by way of example, by addressed by selecting the "options" icon 115 and by going through the main menu which pops up when the option icon 115 is selected and pressed. The user may go through the main menu until the feature is reached that is used for deciding which feature should be shown on the display. The selection is confirmed by pressing an operating device of the operating module. When the operating module is working in a select mode, the different icons shown on the display can be addressed and selected by turning the combined turn press button. The select mode can be entered, by pressing a predetermined operating device of the operating module. It is possible to use one of the operating devices shown in Fig. 1, however, it is also possible to use any other operating device provided on the operating module of the multimedia system.

When the select mode is chosen, the different icons can be addressed by turning part 120a of the turn press button 120. By way of example, icon 115 which represents the main menu can be chosen as a home icon. When the turn press button 120 is turned the marker which marks the home icon 115 jumps from icon to icon. In dependence of the fact whether the turn press button is turned clockwise or anticlockwise the marker jumps from icon to icon in a predetermined sequence and marks the icons to be selected. In order to select one icon the user wants to edit, the user will turn the turn press button until the icon, the user wants to edit, is reached. By way of example, if the user wants to change the sequence of the radio stations from an alphabetical order to an order depending on the signal quality of the received radio station, he or she will turn button 120, until icon 111 is marked. When icon 111 is marked, the marking can be confirmed by pressing part 120b of the button 120. If the radio stations the user can select are either stored in the list in an alphabetical order or in the order of signal quality, there are two possible values of icon 111. This means when pressing button 120, when icon 111 is marked, that the alphabetical order of the radio station will change to an order depending on the signal quality of the radio station. By pressing the button 120 the value of the icon is toggled, if there are only two possible values. The different steps explained above used for changing the order of the radio stations can be used for all icons representing two different values. If there are three or more different possibilities for storing the radio stations in a list, then in order to select one of the orderings, the user may turn the turn press button 120 after he or she has pressed the button 120, when the icon 111 is marked. By turning the turn press button 120 the different possibilities of storing the radio stations in a list will be displayed in icon 111 one after the other. When the icon is displayed on the display, the user wants to choose he or she has to press to button 120 in order to confirm the selection. However, it is also possible that the value is changed by pressing the button. Each pressing of the button would change the value either immediately or after a timeout. For each icon it can be determined in advance whether the value of the icon can be changed by turning or by pressing a button.

If the user wants to use the data from the traffic channel he or she will turn the button 120, until icon 114 is marked. If the TMC icon is marked, and when button 120 is pressed the current traffic messages may be displayed. If the button 120 is pressed again, the display is disabled, so that the messages are not displayed anymore. If the user wants to change the radio station, he or she will turn the turn press button 120, until the icon 112 is selected. After pressing button 120 the user can turn part 120a of the button, so that the different radio stations will appear in icon 112. After a certain timeout, or after the displayed radio station is confirmed by pressing part 120b of button 120 the selected program is broadcast.

It is also possible to directly edit the frequency. When the frequency icon 116 was selected by turning part 120a, and when part 120b of the button 120 is pressed for confirming the selection and the user can directly change the frequency by turning part 120a of the button 120. When the user wants to choose a radio station broadcasting traffic message news the user will choose icon 117 and the use of a radio station broadcasting traffic news is enabled or disabled by pressing button 120, when icon 117 is marked.

It should be understood that there may be many other possibilities of displaying icons. Furthermore, many other icons could be shown on display 110. The feature represented by the icons cannot only be edited directly as described above, it is also possible to edit the different features of the multimedia system or to change a setting of the multimedia system by entering the main menu. By way of example, this is possible by selecting the options icon 115. It is also possible to set up the display, i.e. to choose the number of icons shown on the display by entering the main menu and by going through the menu until a feature is reached which allows to determine which icons should be shown on the display 110, and which should therefore be addressable directly by moving the marker to said icon. It is also possible to determine that an icon representing this feature should be shown on the display, so that when this icon is shown on the display and this icon is selected, the user can enter a menu by pressing the button 120 which allows to determine which icons should be shown on the display.

Furthermore there may exist an e-mail icon on the display. When an electronic mail arrives the icon may be highlighted or the user may be informed by any other way.

The user can then turn the operating device until the mail icon is reached. By pressing the operating device the mail may be displayed on the display or the multimedia system will read the message by using a text-to-speech (TTS) system incorporated into the system.

In the embodiment shown, the multimedia system works in a radio operating mode. For the person skilled in the art it is obvious, that when another operating mode is selected by pressing one of the buttons 131 to 134 other icons will be shown on the display. If an audio operating modus is chosen, the different tracks stored on the storing device such as a CD may be displayed, etc. In the telecommunication operating mode a display showing the numbers from zero to nine may be displayed, and/or an address book showing the different names may be displayed, etc. The method for editing an icon by turning the turn press button for selecting an icon shown on the display and by pressing the turn press button in order to change the value or to display sub-icons or to display a submenu may be the same for all operating modes.

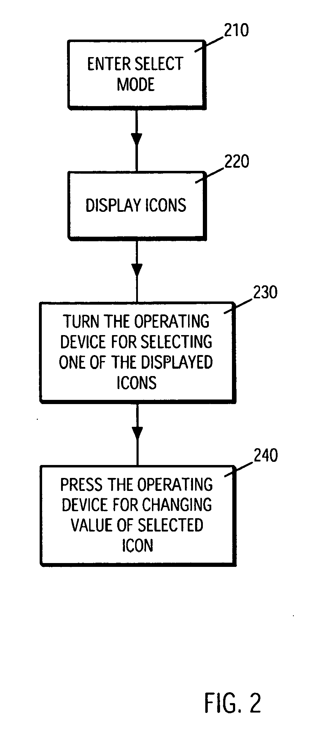

In Fig. 2 the different steps for a direct way to change the setting of the multimedia system are shown. In a first step 210 the select mode may be entered by pressing a predetermined operating device. It is possible that there is one special operating device such as a button which has to be pressed in order to enter the select mode. It is also possible that a predetermined operating device has to be pressed for a predetermined amount of time, by way of example, part 120a of the turn press button 120. When the multimedia system is working in the select mode the displayed icon displayed in step 220 can be selected by turning the operating device as it is shown in step 230. The selection made in step 230 can be confirmed by pressing the operating device for changing the value of the selected icon (step 240). It is possible that the operating devices needed in step 230 and 240 are comprised in one single combined operating device as described in combination with Fig. 1, however, it is also possible to use different operating devices, one that is used as a turning device, another one which is used as a pressing device.

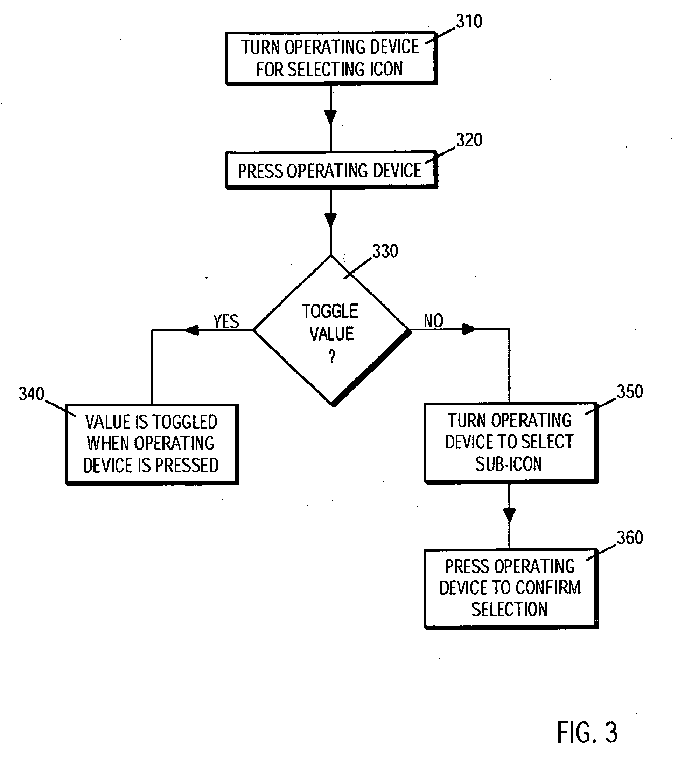

In Fig. 3 the different steps are shown in detail, which are needed in order to change the value of a selected icon depending on the fact, whether the value of the icon is changed by pressing or by turning a button. As mentioned in Fig. 2 the operating device is turned to select an icon the user wants to edit (step 310) and the operating device is pressed in step 320 to change the value of the selected icon. In step 330 it is asked whether the value of the selected icon can be changed by turning or pressing the button. If the value of the icon can be changed by pressing the button, in step 340 the operating device is pressed, so that the value is toggled. By way of example, these operating steps may be used, when the TMC, the PTY or the VF icon are selected as explained in combination with Fig. 1. These icons only have two possible values, so that these values can easily be changed by pressing the button. If it is decided in step 330 that the selected icon can be changed by turning the operating device, the latter has to be turned one more time in step 350. In step 350 the different sub-icons may be displayed representing the different values of the icon. By way of example, if the icon wave band is selected in step 320, the different possible wave bands such as FM/MW/SW are displayed when the operating devices is turned for choosing one of the displayed sub-icons. To confirm the selection the operating device has to be pressed in step 360 when the sub-icon, the user wants to choose is marked. The decision whether the value of the icon is changed by pressing or turning the operating device may depend on the number of values of the chosen icon. If the icon has two possible values, it may be preferred to change the icon by pressing the button so that the value is toggled. If there are more than two or more than three possible values, the value may be addressed by turning the operating device.

However, the number of possible values needs not to be the basis for a decision whether the value is changed by turning or pressing. Another basis may be the ergonomics of the operating device or the navigation system chosen by the designer of the multimedia system in the vehicle.

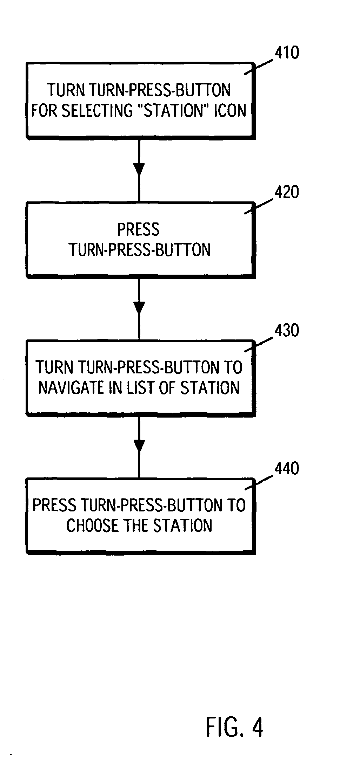

In Fig. 4 the different steps needed to choose a predetermined radio station are shown in detail. When the multimedia system is working in the select mode the turn press button shown in Fig. 1 has to be turned until the station icon is marked in step 410. When the station icon is marked the selection can be confirmed by pressing the turn press button in step 420. The user can then turn the turn press button to navigate in the list of stations. The list of stations may either be arranged alphabetically or in dependence on the signal quality or according to any other requirement. While turning the turn press button in step 430 the station icon will display the different names of the station one after the other. It is also possible that two or three names of radio stations are displayed at the same time and that a marker jumps from one station to the other, when the turn press button is turned. When the user has reached the desired radio station he or she may press the turn press button in order to choose and confirm the selection in step 440.

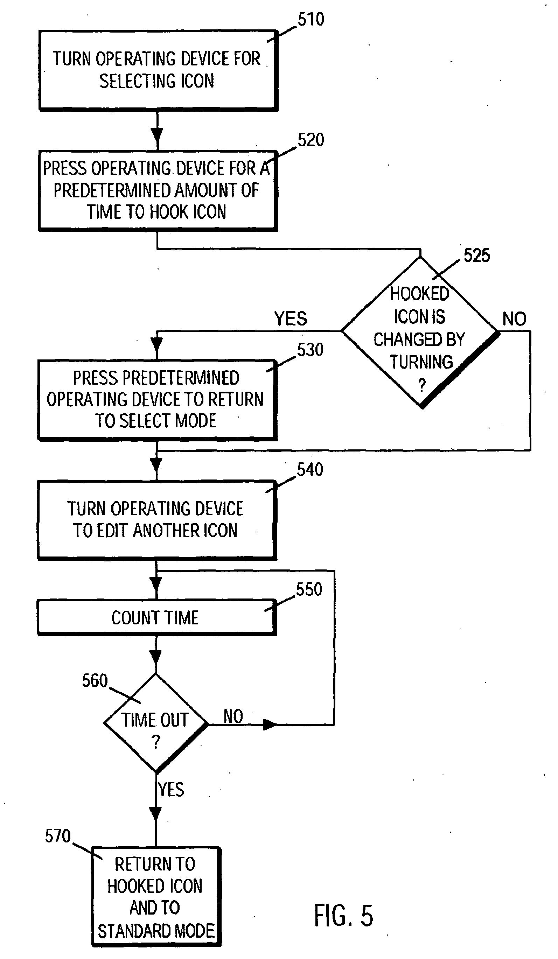

In Fig. 5 the different steps for hooking a predetermined icon is shown in more detail. According to one embodiment it is possible that after a timeout the operating device is not operated the marker would jump back onto its home position, so that pressing the operating device would always open the options menu, when the options icon is chosen as a home icon, or turning the button would always move the marker from icon to icon.

According to another embodiment of the invention it is possible to hook one icon and choose this icon as home icon. This is possible by the following steps. First of all, the operating device is turned for selecting the icon the end user wants to hook (step 510). In the next step 520, an operating device is pressed for a predetermined amount of time to hook the icon in step 520. The hooking means, that, when no either hooking has taken place, as a consequence operating the turn press button will always edit the currently hooked icon. For hooking the icon it is possible to press a determined operating device only, or to press a predetermined operating device for a predetermined amount of time. In step 525, it is asked whether the hooked icon is edited by turning the operating device or by pressing the operating device depending on the fact how the icon is edited (see Fig. 3). If the value of the icon is changed by turning, the turning operation can not be used to select another icon (i.e. can not directly work in the select mode). If the user wants to return to the select mode and wants to edit another icon he has to press the operating device he already pressed in order to hook the icon. As described above the user has to either press a predetermined operating device or has to press it for a predetermined amount of time in order to enter the select mode (step 530). He or she can then turn the operating device to move the marker within the screen to another icon (step 540). After moving the marker to another icon the user can change or edit other icons as described in combination with Fig. 1 to 4. If no other hooking has taken place, then after a timeout for which the time is counted in step 550, the system is again in the hook mode. In step 560 it is asked whether the counted time has exceeded a certain timeout. If this is the case, the system returns to the hooked item, so that when the user operates the turn press button the hooked icon will be edited when the system returns to the hooked icon in step 570. As long as the time does not exceed the timeout the marker stays at the other icon chosen in step 540, so that when operating the turn press button before the time out will edit the icon chosen in step 540. If the hooked icon is edited by pressing the operating device, the turning of the operating device ("no" in step 525) is not needed for editing an icon. A change of the operating mode as in step 530 is not necessary, another icon can be selected directly by turning the operating device as described in step 540.

After the timeout in step 560, the system returns to the hooked icon and the system returns to the standard mode or edit mode, in which an operation of the operating device will edit the hooked icon. If the value of the hooked icon is changed by pressing, another pressing will edit the hooked icon while a turning of the operating device will make the marker jump from icon to icon. In this case the select mode has not to be entered by pressing an operating device in a predetermined way as the tuning for editing the hooked icon is not needed. If the value of the icon is changed by turning, the turning can not be used to select the icons shown in the display, the user has to enter the select mode before, as described in step 530.

The steps shown in Fig. 5 help to control the multimedia system. When the user wants to change one icon predominantly, by way of example, the frequency in the radio operating mode or the program station itself, the user will hook the system to this icon, so that after the timeout the system will always return to the hooked icon, so that every time the user operates the operating device, he or she will edit the hooked icon.

Summarizing, the invention provides a very direct way to change the settings of a multimedia system and facilitates its operation. The display does not only display passive information, but offers direct access to the different features and to the information represented by the icon. Therefore, the handling and the controlling of a multimedia system in vehicles becomes much easier, and the user is not diverted from the traffic by going through different menus.

## Claims

1. Vehicle multimedia system comprising:
- a display (110) displaying at least two icons (111-117) which are selectable by a user for changing a setting of the multimedia system, each icon representing one feature of the multimedia system
- an operating module comprising at least one operating device (120) for operating the multimedia system, wherein said operating device is a turn-press button (120a, 120b), wherein the icons shown on the display are selected and marked by turning the turn-press button, **characterized in that** the value of the feature of an icon having more than two possible values is changed by pressing the turn-press button.

2. Vehicle multimedia system according to claim 1, wherein a plurality of sub-icons is displayed on the display after a selection of one icon, the sub-icons representing the different values of the selected icon.

3. Vehicle multimedia system according to any of the preceding claims, comprising at least one of a radio module, an audio module, a navigation module, a telecommunication module.

4. Vehicle multimedia system according to any of the preceding claims, further comprising a marker which marks the selected icon and which moves from selected icon to selected icon, if the turn button is turned.

5. Vehicle multimedia system according to any of the preceding claims, wherein each icon shown on the display can be selected by operating the operating device in a single way, when a select mode is chosen, which is activated when a predetermined operating device is activated for a predetermined amount of time.

6. Vehicle multimedia system according to any of the preceding claims, wherein the marker marks a predetermined icon as home icon after a timeout in which the operating module is not operated.

7. Vehicle multimedia system according to any of the preceding claims, wherein, when a predetermined operating device is actuated for a predetermined amount of time, the marker hooks one icon as selected icon, when the marker has marked said icon before.

8. Vehicle multimedia system according to claim 7, wherein, when the marker hooks one icon as addressed icon, the possible values of the feature of the icon are chosen by operating the operating device of the operating module.

9. Method for operating a vehicle multimedia system comprising the steps of:
- displaying at least two icons (111-117) on a display (110) of the multimedia system, which are selectable by a user for changing a setting of the multimedia system, each icon representing one feature of the multimedia system,
- operating an operating module of the multimedia system, the operating module comprising at least one operating device, wherein said operating device is a turn-press button and wherein the icons shown on the display are selected and marked by turning the turn-press button, wherein the value of the feature of an icon having more than two possible values is changed by pressing the turn-press button.

10. Method according to claim 9, wherein the icons shown on the display are selected by turning a turn button (120a) of the operating module.

11. Method according to claim 9 or 10, wherein the selected icon is marked.

12. Method according to any of claims 9 to 11, wherein a value of the feature of an icon can be changed when the marker has marked said icon.

13. Method according to any of claims 9 to 12, wherein each icon shown on the display can be selected by operating one operating device in a single way, in a select mode which is activated when a predetermined operating device is activated for a predetermined amount of time.

14. Method according to claim 13, wherein, when the multimedia system is working in the select mode, the select mode is terminated when a predetermined operating device is activated for a predetermined amount of time.

15. Method according to any of claims 9 to 14, wherein the selection of an icon comprises the following steps:
- turning the operating device until said icon is reached and marked,
- pressing the operating device in order to change the value of the icon.

16. Method according to any of claims 9 to 15, wherein the marker selects and marks a predetermined icon as home icon after a timeout in which the operating module is not operated.

17. Method according to any of claims 9 to 16, wherein, when a predetermined operating device is actuated, for a predetermined amount of time, the marker is hooked to the selected icon, when the marker has marked said icon before.

18. Method according to claim 17, further comprising the steps of
- checking whether the hooked icon is edited by turning and in the affirmative,
- pressing a predetermined operating device when a select operating mode should be chosen for selecting another icon shown on the display by turning the operating device, and
- if the hooked icon is edited by pressing, the system works in a hybrid mode in which the turning operation selects the icon as shown on the display and in which the pressing operation edits the hooked icon.

## Patentansprüche

1. Fahrzeugmultimediasystem, umfassend:
- eine Anzeige (110), die mindestens zwei Piktogramme (111-117) anzeigt, welche von einem Benutzer zum Ändern einer Einstellung des Multimediasystems wählbar sind, wobei jedes Piktogramm ein Merkmal des Multimediasystems repräsentiert
- ein Bedienungsmodul, das mindestens ein Bedienelement (120) zum Bedienen des Multimediasystems umfasst, wobei das Bedienelement ein Dreh-Druck-Knopf (120a, 120b) ist, wobei die Piktogramme, die auf dem Display gezeigt sind, durch Drehen des Dreh-Druck-Knopfes ausgewählt und markiert werden, **dadurch gekennzeichnet, dass** der Wert des Merkmals eines Piktogramms, das mehr als zwei mögliche Werte aufweist, durch Drücken des Dreh-Druck-Knopfes geändert wird.

2. Fahrzeugmultimediasystem nach Anspruch 1, wobei mehrere Unterpiktogramme nach einer Auswahl eines Piktogramms auf der Anzeige angezeigt werden, wobei die Unterpiktogramme die verschiedenen Werte des ausgewählten Piktogramms repräsentieren.

3. Fahrzeugmultimediasystem nach einem der vorstehenden Ansprüche, mindestens eines von einem Radiomodul, einem Audiomodul, einem Navigationsmodul, einem Telekommunikationsmodul umfassend.

4. Fahrzeugmultimediasystem nach einem der vorstehenden Ansprüche, des Weiteren eine Markierung umfassend, welche das ausgewählte Piktogramm markiert und welche sich von ausgewähltem Piktogramm zu ausgewähltem Piktogramm bewegt, wenn der Drehknopf gedreht wird.

5. Fahrzeugmultimediasystem nach einem der vorstehenden Ansprüche, wobei jedes Piktogramm, das auf der Anzeige gezeigt wird, durch Bedienen des Bedienelements auf eine einzige Art ausgewählt werden kann, wenn ein Auswahlmodus gewählt ist, welcher aktiviert wird, wenn ein vorbestimmtes Bedienelement für eine vorbestimmte Zeitdauer aktiviert wird.

6. Fahrzeugmultimediasystem nach einem der vorstehenden Ansprüche, wobei die Markierung ein vorbestimmtes Piktogramm als Ausgangspiktogramm nach einer Zeitüberschreitung markiert, in welcher das Bedienungsmodul nicht bedient wird.

7. Fahrzeugmultimediasystem nach einem der vorstehenden Ansprüche, wobei die Markierung, wenn ein vorbestimmtes Bedienelement für eine vorbestimmte Zeitdauer aktiviert wird, ein Piktogramm als ausgewähltes Piktogramm verankert, wenn die Markierung das Piktogramm vorher markiert hat.

8. Fahrzeugmultimediasystem nach Anspruch 7, wobei, wenn die Markierung ein Piktogramm als adressiertes Piktogramm verankert, die möglichen Werte des Merkmals des Piktogramms durch Bedienen des Bedienelements des Bedienungsmoduls gewählt werden.

9. Verfahren zum Bedienen eines Fahrzeugmultimediasystems, die folgenden Schritte umfassend:
- Anzeigen von mindestens zwei Piktogrammen (111-117) auf einer Anzeige (110) des Multimediasystems, welche zum Ändern einer Einstellung des Multimediasystems von einem Benutzer wählbar sind, wobei jedes Piktogramm ein Merkmal des Multimediasystems repräsentiert,
- Bedienen eines Bedienungsmoduls des Multimediasystems, wobei das Bedienungsmodul mindestens ein Bedienelement umfasst, wobei das Bedienelement ein Dreh-Druck-Knopf ist und wobei die Piktogramme, die auf der Anzeige gezeigt sind, durch Drehen des Dreh-Druck-Knopfes ausgewählt und markiert werden, wobei der Wert des Merkmals eines Piktogramms, das mehr als zwei mögliche Werte aufweist, durch Drücken des Dreh-Druck-Knopfes geändert wird.

10. Verfahren nach Anspruch 9, wobei die Piktogramme, die auf der Anzeige gezeigt sind, durch Drehen eines Drehknopfes (120a) des Bedienungsmoduls ausgewählt werden.

11. Verfahren nach Anspruch 9 oder 10, wobei das ausgewählte Piktogramm markiert ist.

12. Verfahren nach einem der Ansprüche 9-11, wobei ein Wert des Merkmals eines Piktogramms geändert werden kann, wenn die Markierung das Piktogramm markiert hat.

13. Verfahren nach einem der Ansprüche 9-12, wobei jedes Piktogramm, das auf der Anzeige gezeigt ist, durch Bedienen eines Bedienelements auf eine einzige Art ausgewählt werden kann, in einem Auswahlmodus, welcher aktiviert wird, wenn ein vorbestimmtes Bedienelement für eine vorbestimmte Zeitdauer aktiviert wird.

14. Verfahren nach Anspruch 13, wobei, wenn das Multimediasystem in dem Auswahlmodus arbeitet, der Auswahlmodus beendet wird, wenn ein vorbestimmtes Bedienelement für eine vorbestimmte Zeitdauer aktiviert wird.

15. Verfahren nach einem der Ansprüche 9-14, wobei die Auswahl eines Piktogramms die folgenden Schritte umfasst:
- Drehen des Bedienelements, bis das Piktogramm erreicht und markiert ist,
- Drücken des Bedienelements, um den Wert des Piktogramms zu ändern.

16. Verfahren nach einem der Ansprüche 9-15, wobei die Markierung ein vorbestimmtes Piktogramm als Ausgangspiktogramm nach einer Zeitüberschreitung auswählt und markiert, in welcher das Bedienungsmodul nicht bedient wird.

17. Verfahren nach einem der Ansprüche 9-16, wobei, wenn ein vorbestimmtes Bedienelement für eine vorbestimmte Zeitdauer aktiviert wird, die Markierung an dem ausgewählten Piktogramm verankert wird, wenn die Markierung das Piktogramm vorher markiert hat.

18. Verfahren nach Anspruch 17, des Weiteren die folgenden Schritte umfassend
- Überprüfen, ob das verankerte Piktogramm durch Drehen editiert wird, und falls ja
- Drücken eines vorbestimmten Bedienelements, wenn ein Auswahlbedienungsmodus zum Selektieren eines anderen Piktogramms, das auf der Anzeige gezeigt ist, durch Drehen des Bedienelements ausgewählt werden soll, und
- wenn das verankerte Piktogramm durch Drücken editiert wird, arbeitet das System in einem Hybridmodus, in welchem die Drehbedienung das Piktogramm wie auf der Anzeige gezeigt auswählt und in welchem die Druckbedienung das verankerte Piktogramm editiert.

## Revendications

1. Système multimédia pour véhicule, comprenant:
- un afficheur (110) affichant au moins deux pictogrammes (111-117) aptes à être sélectionnés par un utilisateur pour modifier un réglage du système multimédia, chaque pictogramme représentant une caractéristique du système multimédia,
- un module de commande comprenant au moins un organe de commande (120) pour actionner le système multimédia, ledit organe de commande étant un bouton rotatif/poussoir (120a, 120b), les pictogrammes affichés sur l'afficheur étant sélectionnés et repérés par rotation du bouton rotatif/poussoir, **caractérisé en ce que** la valeur de la caractéristique d'un pictogramme ayant plus que deux valeurs possibles est modifiée par appui sur le bouton rotatif/poussoir.

2. Système multimédia pour véhicule selon la revendication 1, dans lequel une pluralité de sous-pictogrammes est affichée sur l'afficheur après la sélection d'un pictogramme, les sous-pictogrammes représentant les différentes valeurs du pictogramme sélectionné.

3. Système multimédia pour véhicule selon l'une quelconque des revendications précédentes, comprenant au moins un parmi un module radio, un module audio, un module de navigation, un module de télécommunication.

4. Système multimédia pour véhicule selon l'une quelconque des revendications précédentes, comprenant en outre un marqueur marquant le pictogramme sélectionné et se déplaçant d'un pictogramme sélectionné vers un autre pictogramme sélectionné lorsqu'on tourne le bouton rotatif.

5. Système multimédia pour véhicule selon l'une quelconque des revendications précédentes, dans lequel chaque pictogramme affiché sur l'afficheur peut être sélectionné en actionnant l'organe de commande d'une manière unique, lorsqu'un mode de sélection est choisi, qui est activé lorsqu'un organe de commande prédéterminé est activé pour une période de temps prédéterminée.

6. Système multimédia pour véhicule selon l'une quelconque des revendications précédentes, dans lequel le marqueur marque un pictogramme prédéterminé en tant que pictogramme d'origine après une temporisation pendant laquelle le module de commande n'est pas actionné.

7. Système multimédia pour véhicule selon l'une quelconque des revendications précédentes, dans lequel, lorsqu'un organe de commande prédéterminé est activé pour une période de temps prédéterminée, le marqueur accroche un pictogramme en tant que pictogramme sélectionné lorsque le marqueur a marqué ladite pictogramme au préalable.

8. Système multimédia pour véhicule selon la revendications 7, dans lequel, lorsque le marqueur accroche un pictogramme en tant que pictogramme adressé, les valeurs possibles de la caractéristique du pictogramme sont choisies en actionnant l'organe de commande du module de commande.

9. Procédé pour actionner un système multimédia de véhicule comprenant les étapes suivantes:
- affichage d'au moins deux pictogrammes (111-117) sur un afficheur (110) du système multimédia, qui sont aptes à être sélectionnés par un utilisateur pour modifier un réglage du système multimédia, chaque pictogramme représentant une caractéristique du système multimédia,
- actionnement d'un module de commande du système multimédia, le module de commande comprenant au moins un organe de commande, ledit organe de commande étant un bouton rotatif/poussoir, et les pictogrammes affichés sur l'afficheur étant sélectionnés et marqués en tournant le bouton rotatif/poussoir, la valeur de la caractéristique d'un pictogramme ayant plus que deux valeurs possibles étant modifiée par appui sur le bouton rotatif/poussoir.

10. Procédé selon la revendication 9, dans lequel les pictogrammes affichés sur l'afficheur sont sélectionnés par rotation d'un bouton rotatif (120a) du module de commande.

11. Procédé selon la revendication 9 ou 10, dans lequel le pictogramme sélectionné est marqué.

12. Procédé selon l'une quelconque des revendications 9 à 11, dans lequel une valeur de la caractéristique d'un pictogramme peut être modifiée lorsque le marqueur a marqué ledit pictogramme.

13. Procédé selon l'une quelconque des revendications 9 à 12, dans lequel chaque pictogramme affiché sur l'afficheur peut être sélectionné en actionnant un organe de commande d'une manière unique, dans un mode de sélection, qui est activé lorsqu'un organe de commande prédéterminé est activé pour une période de temps prédéterminée.

14. Procédé selon la revendication 13, dans lequel, lorsque le système multimédia fonctionne dans le mode de sélection, le mode de sélection est terminé lorsqu'un organe de commande prédéterminé est activé pour une période de temps prédéterminée.

15. Procédé selon l'une quelconque des revendications 9 à 14, dans lequel la sélection d'un pictogramme comprend les étapes suivantes:
- rotation de l'organe de commande jusqu'à ce que ledit pictogramme est atteint et marqué,
- appui sur l'organe de commande pour changer la valeur du pictogramme.

16. Procédé selon l'une quelconque des revendications 9 à 15, dans lequel le marqueur sélectionne et marque un pictogramme prédéterminé en tant que pictogramme de départ après une temporisation pendant laquelle le module de commande n'est pas actionné.

17. Procédé selon l'une quelconque des revendications 9 à 16, dans lequel, lorsqu'un organe de commande prédéterminé est actionné pour une période de temps prédéterminée, le marqueur est accroché sur le pictogramme sélectionné lorsque le marqueur a marqué ladite pictogramme au préalable.

18. Procédé selon la revendication 17, comprenant en outre les étapes suivantes:
- vérification, si le pictogramme accroché est édité par rotation, et dans l'affirmative,
- appui sur un organe de commande prédéterminé lorsqu'un mode de commande de sélection doit être choisi pour sélectionner un autre pictogramme affiché sur l'afficheur par rotation de l'organe de commande, et
- si le pictogramme accroché est édité par appui, le système fonctionne dans un mode hybride dans lequel l'actionnement en rotation sélectionne le pictogramme tel qu'affiché sur l'afficheur, et dans lequel l'actionnement en appui édite le pictogramme accroché.
